# EUROPEAN PATENT APPLICATION

(11) **EP 2 083 268 A1**
(43) Date of publication of application: **29.07.2009**
(21) Application number: 07800881.0
(22) Date of filing: 06.09.2007
(51) Int. Cl.: G01N 33/49

(54) **ANALYSIS METHOD FOR 5-DIFFERENTIAL COMPLETE BLOOD CELL BASED ON VISUAL IMAGE**

(30) Priority: 13.10.2006 CN 200610124771
(71) Applicant: Tecom Science Corporation, National Hi-tech Industry , Development Zone Nanchang Jiangxi 330096 (CN)
(72) Inventor: ZHOU, Honghua, Jiangxi 330096 (CN); DAI, Hong, Jiangxi 330096 (CN); YAN, Xiao, Jiangxi 330096 (CN); YANG, Jia, Jiangxi 330096 (CN)
(74) Representative: Isenbruck, Günter
(86) International application number: PCT/CN2007/002665
(87) International publication number: WO 2008/046292

(57) **Abstract**

An analysis method for 5-differential complete blood cell based on visual image is provided. The analysis method for 5-differential complete blood cell is carried out in two channels. The method includes: counting blood cells by typical cytometry to obtain the amount of blood cells; identifying and counting the blood cells by image recognition to obtain the percent of each kind of blood cells; then calculating the results from the two channels to obtain the number of each kind of blood cells.

## Description

### FIELD OF THE INVENTION

The present invention relates to an analysis method for blood cells, especially relates to an analysis method for 5-differential complete blood cell.

### BACKGROUND OF THE INVENTION

Blood cell analyzer is medical testing equipment with integration of light, mechanics, electrics and software. It belongs to the medical testing equipment in medical equipment industry. It is mainly used for analysis of human's complete blood cell to replace the previous blood routine examination. It has the advantages of fast detection, simple operation and more detection parameters, and so on. According to the number of white blood cell differential, the blood cell analyzer is divided into 3-differential blood cell analyzer and 5-differential blood cell analyzer.

The blood cell differential analysis method is the basis of the design and manufacture of blood cell analyzer. Based on different blood cell differential analysis methods, both domsetic and abroad manufacturers have designed and manufactured different types of blood cell differential instruments.

The 5-differential blood cell analyzer was invented in the mid 1990s. In 1981, Technicon designed the first H 6000 5-differential blood cell analyzer based on flow cytometry, and in 1985, it presented the formed H 1 blood cell counting system.

In the 1990s, the companies of Coulter, Abbott, Sysmex, ABX and the like, on the basis of 3-differential blood cell counting instrument and combining the methods of histochemistry, immunohistochemistry, high-frequency transduction, laser light scattering and the like, presented a series of 5-differential multi-parameters blood cell analyzer system. For instance STKS II, 5-differential blood cell analyzer of US Coulter Company, is on the basis of the combination of impedance method, conductance method, and light scattering method, which are pure physical methods; 5-differential blood cell analyzer Advia 120 of US Abbott company is on the basis of laser scattering and cytochemical staining method; 5-differential blood cell analyzer SF-3000 of Japan Sysmex company is on the basis of the combination of laser flow cytometry detection and cell group chemistry staining method, its SE-9000 is on the basis of multi-channel impedance and radio frequency detection method, while the XE-2100 is on the basis of the combination of laser flow cytometry detection method and nucleic acid fluorescence staining method; 5-differential blood cell analyzer Pentra60 of France ABX company is on the basis of the combination of DHSS, dual-sheath flow system, cytochemical staining method, optical analysis method, its Pentra120retic is on the basis of the combination of laser flow cytometry method, fluorescence staining method, sheath flow impedance method and light scattering method; 5-differential blood cell analyzer CD-3700R of US ABBOTT company is on the basis of MAPSS method (multi-angle polarized scatter seperation method) and have 4-angle light-scattering.

Similar to the 3-differential blood cell analyzer, 5-differential blood cell analyzer is designed and manufactured on the basis of the existing blood cell differential analysis methods, and their grouping (classification) methods both indirectly simulate a variety of electrical signals generated by the cells through mathematical model and work out the result of cell classification. The results will also be affected by the accuracy of the collection of cell electrical signals, the rationality of the mathematical model and many other factors, and the rate of accuracy is only 85%∼90%, so about 10% of the samples need to be smeared and stained for artificial microscopic reexamination.

For above reasons, according to the artificial smear staining microscopic examination proposed by the international committee for standardization in hematology (ICSH) as the reference methods for the analysis of complete blood cells. Coulter, Sysmex and Roche companies have developed dyeing machines with auto push function, as auto push and stain the samples that need reexaminations to reduce the workload of reexaminations. However, this does not change complete white blood cell analyzer in methodology, just improved pre-process before artificial microscopic examination on original basis, and this does not completely solve the full automation problem of 5-differential complete blood cell analyzer, and it is still greatly affected by human factors.

As for the instruments assorting simple cells through image analysis method, -8200 which is produced by Hitachi, Ltd. in Japan in 1980s is a representative. Such instruments completely use image analysis method, staining blood smear, scanning each field of vision with a microscope with scanning lens, and then comparing obtained cell image with standard image stored in the instrument to analyze and finally determine the cell type. Such pure image analysis method is limited by the calculating speed of the computer, and can't enter the field of practical application.

At present, in the classification of blood cell morphology, 5-differential or more differential classification, or even the blood cell analyzer with special naive cell analysis channels, can not fundamentally solve the problem of blood cell morphology, and can not entirely replace the artificial classification with the results of instrument classification.

### SUMMARY OF THE INVENTION

The purpose of the present invention is to provide a new analysis method for 5-differential complete blood cell based on visual image, so that the 5-differential complete blood cell analysis can achieve the effect of artificial microscopic examination and classification.

The present invention can be achieved through the following ways: combining the image recognition technology with the conventional cell counting technology, identifying and classifying the blood cells according to the standard reference method of international committee for standardization in hematology (ICSH).

To be more specific, 5-differential complete blood cell can be divided into two channels: one is blood cell counting channel, which adopts the conventional blood cell counting method to count the blood cells in blood sample to obtain the total amount of blood cells; another is image identifying and counting channel of the blood cells, wich adopts image recognition technology to identify and calculate the blood cells from the same blood sample, and identify and calculate the percentage of various types of blood cells. Then, calculate the counting result of blood cell counting channel and image identifying and calculating result of blood cell to obtain the number of various types of blood cells in the blood samples.

The blood cell counting channel described in the present invention can set two branch channels, i.e. white blood cell counting channel and red blood cell/platelet counting channel. In general, if white blood cell needs to be counted, then set the white blood cell counting channel; if red blood cell/platelet need to be counted, then set the red blood cell/platelet counting channel; if the white blood cell and red blood cell/platelet need to be counted at the same time, then set the white blood cell counting channel and the red blood cell/platelet counting channel at the same time.

In the present invention it can also set hemoglobin measurement in the white blood cell counting channel so as to add hemoglobin measurement items.

Blood cell counting channel described in the present invention can use the conventional blood cell counting method, i.e. it can use conventional impedance method, and can also adopt conventional flow cytometry method. In other words, the blood cell counting channel described in the present invention can be achieved through the counting method of the existing typical 3-differential blood cell analyzer.

The blood cell counting channel composed of the typical 3-differential blood cell analyzer described in the present invention can be achieved through the following ways: first, the blood samples are diluted according to the proportion in conformity with white blood cell count, and then divided into two branch channels: add hemolytic agents in one channel, and then perform count/color comparison to obtain the result of white blood cell counting and hemoglobin measurement; another channel is diluted for the second time, and the red blood cell and platelet are counted to obtain the counting result of red blood cell and platelet.

The blood cell image identifying and counting channel described in the present invention can also set two branch channels, i.e. white blood cell image identifying and counting channel and red blood cell/platelet image identifying and counting channel. In general, if white blood cell needs to be image identified and calculated, then set white blood cell image identifying and counting channel; if red blood cell/platelet needs to be image identified and calculated, then set red blood cell/platelet image identifying and counting channel; if the white blood cell, red blood cell/platelet need to be image identified and calculated at the same time, then set white blood cell image identifying and counting channel and red blood cell/platelet image identifying and counting channel at the same time.

For the white blood cell image recognition and calculation in the blood cell image identifying and counting channel in the present invention, identifying and counting 100-800 of the white blood cell in the blood sample is one image recognition and calculation unit of image recognition and calculation. However, this range is not to limit present invention, while meeting the accuracy of statistical results, and ensuring sufficient image recognition speed of the white blood cell, or the requirement for image recognition speed of the white blood cell is not very high, the amount of image recognition and calculation unit of the white blood cell can be wider. In the present invention , 400-600 white blood cells is the best.

For the red blood cell image recognition and calculation of the blood cell image identifying and counting channel in the present invention, identifying and counting 1 000-20 000 of the red blood cell in the blood samples is one image recognition and calculation unit of image recognition and calculation. However, this range is not to limit present invention, while meeting the accuracy of statistical results, and ensuring sufficient image recognition speed of the red blood cell, or the requirement for image recognition speed of the red blood cell is not very high, the amount of image recognition and calculation unit of the red blood cell can be wider. In present invention, 8 000-12 000 red blood cells is the best.

The white blood cell image identifying and counting channel described in present invention can be achieved through the following ways: firstly preparing blood smear, staining, and then performing micrograph, finally performing white blood cell image recognition and calculation.

The white blood cell image recognition and calculation described in the present invention can be aimed at the following several types of white blood cells: neutrophil cells, acidophilic cells, basophilic cells, lymphocytes, monocytes, naive granular cells and other abnormal white blood cells not included in the above cells. However, the types of white blood cell described in the present invention are not to limit the method in the present invention, while if possible, abnormal white blood cell can also be further classified.

Based on the white blood cell classification described in present invention, the white blood cell can be divided into neutrophil cells, acidophilic cells, basophilic cells, lymphocytes, monocytes according to the existing white blood cell 5-differential classification standard. The five kinds of cells is image identified and calculated, while the identification and calculation of the naive granular cells and other abnormal white blood cells are included in other cells.

The red blood cell/platelet image identifying and counting channel described in the present invention can be achieved through the following ways: firstly performing vital staining, and preparing blood smear, staining, and then performing micrography, performing red blood cell/platelet image recognition and calculation.

For the red blood cell/platelet image identifying and counting channel described in the present invention, the micrography, image recognition and calculation of red blood cell/platelet can be aimed at the following types: red blood cells, platelets, reticulocytes, nucleated red blood cells, stem cells image, and abnormal red blood cells. However, the classification of blood cell described in the present invention is not to limit the method in the present invention, if possible, the classification of blood cell can also be further divided.

The red blood cell/platelet image recognition and calculation described in the present invention, include platelet identifying and counting, red blood cell identifying and counting, reticulocyte image recognition, nucleated red blood cell image recognition, stem cell image recognition, abnormal red blood cell image recognition, and the percentage calculation of platelet and red blood cell.

According to the method described in the present invention, a new 5-differential complete blood cell analysis equipment (or system) can be constructed based on visual image.

The 5-differential complete blood cell analyzer according to present invention includes following units: blood cell counting unit, blood cell identifying and counting unit, result output unit.

The units of the 5-differential complete blood cell analyzer according to present invention can be further described as follows:

The blood cell counting unit of 5-differential complete blood cell analyzer according to present invention includes white blood cell counting, hemoglobin measurement, red blood cell counting and platelet counting. The white blood cell counting includes the dilution of blood samples, adding hemolytic agents, blood cell counting; hemoglobin measurement includes the dilution of blood samples, adding hemolytic agents, hemoglobin index measurement; red blood cell counting and platelet counting also include the dilution of blood samples, respective red blood cell and platelet counting.

The blood cell image identifying and counting unit of 5-differential complete blood cell analyzer according to the present invention includes two channels. One channel is white blood cell image identifying channel, including the preparation of blood smear, staining, micrography, 5-differential white blood cell image identifying and counting, naive granular cell image identifying and counting, abnormal white blood cell image identifying and counting, and the percentage calculation of various white blood cell; another channel is red blood cell/platelet image identifying channel, including the vital staining of blood samples, smearing, micrography, platelet and red blood cell identifying, counting and percentage calculation, reticulocyte image identifying, nucleated red blood cell image identifying, stem cell image identifying, abnormal red blood cell image identifying.

The result output unit described in the present invention is to calculate the total amount of white blood cell output from blood cell counting unit and the percentage of various white blood cells output from blood cell image identifying unit of the same blood sample to obtain specific value of various white blood cell in testing blood samples; to calculate the total amount of red blood cell output from blood cell counting unit and the percentage of platelets/red blood cells output from blood cell image identifying unit of the same blood sample to obtain specific value of platelet in testing blood samples based on image. So the 5-differential complete blood cell analysis can achieve the effect of artificial microscopic examination and classification.

The 5-differential complete blood cell analyzer described in the present invention also includes the blood sample introducing unit. Blood sample introducing can adopt automatically introducing, and can also adopt manual introducing. The automatic introducing unit can include automatic transmission of blood samples, barcode identification, mixing, puncture sampling, separating blood through shear valve.

The present invention combines the image identification technology with conventional cell counting technology, and imitates standard reference method of international committee for standardization in hematology (ICSH) to identify and classify white blood cells. It provides a new 5-differential complete blood cell analysis system based on visual image. It enables the 5-differential complete blood cell analysis to achieve the effect of artificial microscopic examination and classification, which greatly improves the accuracy of blood cell classification results and the automation level of complete blood cell analysis.

### DESCRIPTION OF DRAWINGS

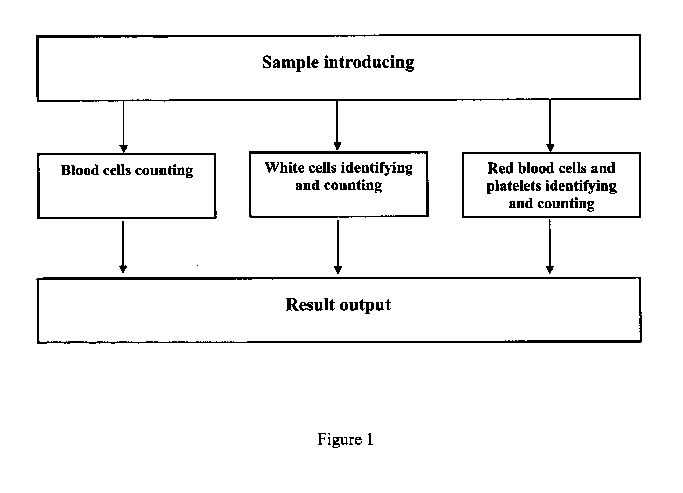

Figure 1 is a schematic block diagram of the present invention, including sample introducing unit, blood cell counting unit, white blood cell identifying and counting unit, red blood cell/platelet identifying and counting unit, and result output unit.
Figure 2 is a schematic diagram of a embodiments of the present invention. ① sample introducing unit, including automatic introducing and manual introducing, ② blood cell counting and hemoglobin measuring unit, ③ white blood cell identifying and counting unit, ④ red blood cell, platelet identifying and counting unit, ⑤ result output unit.

### DETAIL DESCRIOBTION OF INVENTION

The present invention will be further described through the following embodiments,

### Embodiment

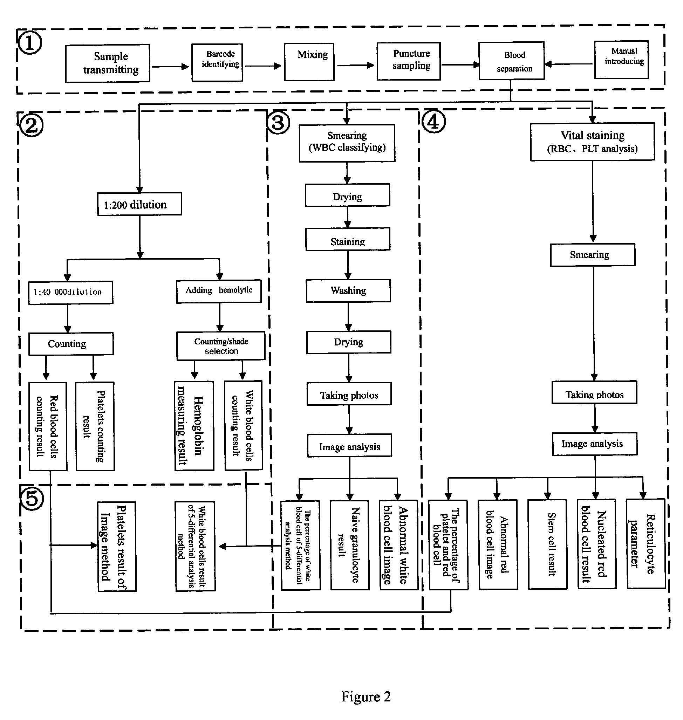

Figure 2 is a schematic diagram of specific embodiment.

This embodiment includes sample introducing unit, blood cell counting unit, blood cell identifying and counting unit, result output unit. The blood cell counting unit includes hemoglobin measurement; the blood cell identifying and counting unit includes two branch channels: whiteblood cell identifying and counting, red blood cell and platelet identifying and counting, the two branch channels.

The sample introducing unit in the present embodiment adopts the combination of automatic sample introducing and manual sample introducing, wherein the automatic sample introducing includes: the automatic introduction of blood samples, barcode identification, mixing, puncture sampling, blood separation valve. In manual sample introducing, the sample is manually introduced, and after the instrument sampling, the blood separation value will automatically separate the blood.

The blood cell counting and hemoglobin measuring unit in the present embodiment is divided into two branch channels, one is red blood cell and platelet counting channel, and the other is white blood cell counting and hemoglobin measurement channel. The process is: dilute the blood samples in the ratio of 1:200, and then a part of diluted blood enters the red blood cell and platelet counting channel, and then the blood sample entered this channel is diluted in the ratio of 1:40 000, perform red blood cell counting and platelet counting respectively, and respectively output the result of the red blood cell counting and platelet counting; add hemolytic agents to the blood sample entered the white blood cell counting and hemoglobin measurement channel firstly, and then perform the white blood cell counting and colorimetric measurement of hemoglobin, and respectively output the result of white blood cell counting and hemoglobin measurements.

The function of the blood cell counting and hemoglobin measuring unit in the present embodiment is actually a function implemented by a conventional 3-differential blood cell analyzer. In other words, the blood cell counting and hemoglobin measuring unit in the present embodiment is implemented by adopting the method of the existing 3-differential blood cell analyzer.

The white blood cell identifying and counting unit in the present embodiment includes: blood smear staining, micrography, image identifying and counting. After the blood smear is stained, the red blood cells is removed, and then take micrography, finally perform image identifying and counting. Image identifying and counting mentioned here includes: the division of white blood cells, feature extraction, feature classification and counting. Mainly through the identification of white blood cells, the white blood cells can be divided into neutrophil cells, acidophilic cells, basophilic cells, lymphocytes, monocytes, naive granular cells and abnormal white blood cells. Calculate the identified various cells separately and calculate total of them, and 400 cells are set as an identifying and counting unit to calculate the percentage of various types of cells.

The red blood cell/platelet identifying and counting branch unit in the present embodiment includes: vital stain of blood sample, preparation of smear, micrography, and image identifying and counting. After vital stain of blood sample, prepare blood smear, and then take micrography, finally perform image identifying and counting. Image identifying and counting mentioned here includes: the division of red blood cells, feature extraction, feature classification and counting. Mainly through the identification of red blood cells, the red blood cells can be divided into reticulocytes, nucleated red blood cells, stem cells, abnormal red blood cells, in the meantime, calculate the percentage of platelets and red blood cells, setting 10 000 red blood cells as a identifying and counting unit to calculate the percentage of platelets and red blood cells.

The result output unit in the present embodiment will gather partial result obtained from blood cell counting and hemoglobin measuring unit, white blood cell identifying and counting branch unit, red blood cell/platelet identifying and counting branch unit. In details, white blood cell count result obtained from blood cell counting and hemoglobin measuring unit multiplied by the percentage of various cells obtained from white blood cell identifying and counting branch unit is the number of various white blood cell in blood samples; the red blood cell/platelet count result obtained from red blood cell/platelet counting unit multiplied by the percentage of platelets and the red blood cells obtained from platelet identifying and counting unit is the number of platelets in blood sample based on image identifying.

At the same time, the present embodiment can also obtain measurement result of hemoglobin, identifying result of naive granular cells image, image identifying result of abnormal white blood cells, image identifying result of reticulocyte, image identifying result of nucleated red blood cell, image identifying result of stem cell, and image identifying result of abnormal red blood cell.

## Claims

1. An analysis method for 5-differential complete blood cell based on visual image includes blood cells counting, wherein, it sets two channels of blood cell counting and blood cell image identifying and counting, the percentage of various types of blood cells obtained by blood cell image identifying and counting channel and the total amount of various types of blood cells obtained by blood cell counting channel are calculated to obtain the value of various types of blood cells.

2. The method according to claim 1, wherein, it respectively sets white blood cells counting and red blood cells/platelets counting channels in blood cells counting channels.

3. The method according to claim 2, wherein, it adds a new measurement unit of hemoglobin in white blood cell counting channels.

4. The method according to claim 1, wherein, it respectively sets white blood cells image identifying and counting channels and red blood cells/platelets image identifying and counting channels in blood cells image identifying and counting channels.

5. The method according to claim 1 or 4, wherein, identifying and counting 100-800 of white blood cells in blood sample is an image identifying and counting unit for white blood cells image identifying and counting channel.

6. The method according to claim 5, wherein, identifying and counting 400-600 of white blood cells in blood sample is an image identifying and counting unit for white blood cells image identifying and counting channel.

7. The method according to claim 1 or 4, wherein, identifying and counting 1,000-20,000 of red blood cells in blood sample is an image identifying and counting unit for red blood cells image identifying and counting channel.

8. The method according to claim 7, wherein, identifying and counting 8,000-12,000 of red blood cells in blood sample is an image identifying and counting unit for red blood cells image identifying and counting channel.

9. The method according to claim 1 or 4, wherein, the white blood cells image identifying and counting channel includes preparation of blood smear, staining, micrography, image recognition and calculation; red blood cell image identifying and counting channel includes blood vital staining, preparation of blood smear, micrography, image recognition and calculation.

10. The method according to claim 9, wherein, white blood cells image identifying and counting channel includes neutrophil cells, acidophilic cells, basophilic cells, lymphocytes, monocytes, naive granulocyte, and abnormal white cells.

11. The method according to claim 9, wherein, red blood cells image identifying and counting channel includes platelets, reticulocytes, nucleated red blood cells, stem cells, and abnormal red blood cells.
